# EUROPÄISCHE PATENTSCHRIFT

(11) **EP 1 105 624 B1**
(45) Veröffentlichungstag und Bekanntmachung des Hinweises auf die Patenterteilung: **04.06.2003**
(21) Anmeldenummer: 99952298.0
(22) Anmeldetag: 04.08.1999
(51) Int. Cl.: F01K 23/06, F02C 3/28

(54) **GAS- UND DAMPFTURBINENANLAGE**
GAS AND STEAM TURBINE UNIT
INSTALLATION DE TURBINE A GAZ ET A VAPEUR

(30) Priorität: 17.08.1998 DE 19837251
(43) Veröffentlichungstag der Anmeldung: 13.06.2001
(73) Patentinhaber: SIEMENS AKTIENGESELLSCHAFT, 80333 München (DE)
(72) Erfinder: SCHIFFERS, Ulrich, D-90542 Eckental (DE); HANNEMANN, Frank, D-91080 Spardorf (DE)
(86) Internationale Anmeldenummer: DE9902440
(87) Internationale Veröffentlichungsnummer: WO00011325

(56) Entgegenhaltungen:
- HAUPT G: "EFFIZIENTE UND UMWELTFREUNDLICHE STROMERZEUGUNG IM GUD-KRAFTWERK MIT INTEGRIERTER VERGASUNG" ELEKTROTECHNIK UND INFORMATIONSTECHNIK,AT,SPRINGER VERLAG, WIEN, Bd. 113, Nr. 2, 1. Februar 1996 (1996-02-01), Seiten 102-108, XP000555695 ISSN: 0932-383X
- MUELLER R ET AL: "KOMBI-KRAFTWERK MIT KOHLEVERGASUNG" VGB KRAFTWERKSTECHNIK,DE,VGB KRAFTWERKSTECHNIK GMBH. ESSEN, Bd. 72, Nr. 5, 1. Mai 1992 (1992-05-01), Seiten 413-419, XP000268390 ISSN: 0372-5715

## Beschreibung

Die Erfindung betrifft eine Gas- und Dampfturbinenanlage mit einem einer Gasturbine rauchgasseitig nachgeschalteten Abhitzedampferzeuger, dessen Heizflächen in den Wasser-Dampf-Kreislauf einer Dampfturbine geschaltet sind, und mit einer der Brennkammer der Gasturbine über eine Brennstoffleitung vorgeschalteten Vergasungseinrichtung für Brennstoff, wobei in die Brennstoffleitung ein Sättiger geschaltet ist, in dem der vergaste Brennstoff im Gegenstrom zu einem in einem Sättigerkreislauf geführten Wasserstrom geführt ist.

Eine Gas- und Dampfturbinenanlage mit integrierter Vergasung von fossilem Brennstoff umfaßt üblicherweise eine Vergasungseinrichtung für den Brennstoff, die ausgangsseitig über eine Anzahl von zur Gasreinigung vorgesehenen Komponenten mit der Brennkammer der Gasturbine verbunden ist. Der Gasturbine kann dabei rauchgasseitig ein Abhitzedampferzeuger nachgeschaltet sein, dessen Heizflächen in den Wasser-Dampf-Kreislauf der Dampfturbine geschaltet sind. Eine derartige Anlage ist beispielsweise aus der GB-A 2 234 984 bekannt.

Zur Reduktion des Schadstoffausstoßes bei der Verbrennung des vergasten fossilen Brennstoffs ist bei dieser Anlage in die Brennstoffleitung zwischen die Vergasungseinrichtung und die Brennkammer der Gasturbine ein Sättiger geschaltet, in dem der vergaste Brennstoff mit Wasserdampf beladen wird. Dazu durchströmt der vergaste Brennstoff den Sättiger im Gegenstrom zu einem Wasserstrom, der in einem als Sättigerkreislauf bezeichneten Wasserkreislauf geführt ist. Zur Einstellung eines für die Beladung des vergasten Brennstoffs mit Wasserdampf ausreichenden Temperaturniveaus im Sättiger ist dabei eine Einkopplung von Wärme in den Sättigerkreislauf durch Abkühlung von Entnahmeluft und/oder durch Abkühlung des Rohgases aus der Brennstoffvergasung vorgesehen.

Bei dieser Anlage ist der Betrieb des Sättigers jedoch abhängig vom Betriebszustand der Vergasungseinrichtung und/oder vom Betriebszustand einer der Vergasungseinrichtung vorgeschalteten Luftzerlegungsanlage, so daß dieses Konzept nur eine begrenzte Flexibilität aufweist. Zudem ist ein derartiges Konzept hinsichtlich einer Regelung vergleichsweise aufwendig und somit störanfällig.

Aus der US 5,319,924 ist es dabei bekannt, das in einen Sättiger einzuspeisende Speisewasser in einem Wärmetauscher vorzuwärmen, wobei der Wärmetauscher primärseitig mit ungereinigtem Rohgas beaufschlagbar ist. Weiterhin ist aus der DE 43 21 081 ein als Brennstoffbefeuchter ausgebildeter Sättiger bekannt, bei dem zur Vorwärmung des Sättigerwassers ein Wärmetauscher vorgesehen ist, der mit Speisewasser primärseitig beaufschlagbar ist.

In dem Artikel _{"}Effiziente und umweltfreundliche Stromerzeugung im GUD-Kraftwerk mit integrierter Vergasung" von G. Haupt, aus "Elektrotechnik und Informationstechnik", AT, Springer Verlag, Wien, Band 113, Nr. 1,2 (Februar 1996), Seiten 102-108, ist die Erwärmung eines in einen Sättiger einzuspeisenden Wasserstroms in einem Wärmetauscher beschrieben. Die Erwärmung des Wasserstroms erfolgt dabei im Wärmetausch mit Speisewasser, welches dem Wasser-Dampf-Kreislauf der Dampfturbine entnommen und in einem hierfür eigens vorgesehenen in einen Umwälzkreis geschalteten Reservoir ("Flash Tank") bereitgestellt wird. In diesen Umwälzkreis ist ein Wärmetauscher geschaltet, in dem das Speisewasser Wärme von einem Teilstrom verdichteter Luft aufnimmt, die sich dabei entsprechend abkühlt.

Der Erfindung liegt daher die Aufgabe zugrunde, eine Gas- und Dampfturbinenanlage der oben genannten Art anzugeben, die auch bei verschiedenen Betriebszuständen auf besonders einfache Weise einen zuverlässigen Betrieb des Sättigers ermöglicht.

Diese Aufgabe wird erfindungsgemäß gelöst, indem ein-zur Erwärmung des Wasserstroms sekundärseitig in den Sättigerkreislauf geschalteter Sättigerwasser-Wärmetauscher primärseitig mit aus dem Wasser-Dampf-Kreislauf der Dampfturbine entnommenem Speisewasser beaufschlagbar ist, wobei das im Sättigerwasser-Wärmetauscher abgekühlte Speisewasser mittels eines Teilstroms verdichteter Luft aufwärmbar ist, wobei der Teilstrom verdichteter Luft einer der Vergasungseinrichtung vorgeschalteten Luftzerlegungsanlage zuführbar ist, und wobei zur Kühlung des Teilstroms verdichteter Luft in eine den Luftverdichter mit der Luftzerlegungsanlage verbindende Entnahmeluftleitung primärseitig ein weiterer Wärmetauscher geschaltet ist, der sekundärseitig in eine den Speisewasser-Wärmetauscher ausgangsseitig mit einem dem Abhitzedampferzeuger zugeordneten Speisewasserbehälter verbindende Speisewasserleitung geschaltet ist.

Die Erfindung geht von der Überlegung aus, daß ein zuverlässiger Betrieb des Sättigers auch bei verschiedenen Betriebszuständen und somit eine besonders hohe Flexibilität der Gasund Dampfturbinenanlage ermöglicht ist, indem der Sättiger unabhängig von den Betriebsparametern der Vergasungseinrichtung und der Luftzerlegungsanlage betreibbar ist. Dabei sollte insbesondere die Wärmeeinkopplung in den Sättigerkreislauf nicht unmittelbar über ein aus der Vergasungseinrichtung abströmendes Medium oder über der Luftzerlegungsanlage zuströmende Entnahmeluft erfolgen. Statt dessen ist vielmehr eine Wärmeeinkopplung in den Sättigerkreislauf über ein aus dem Wasser-Dampf-Kreislauf der Dampfturbine entnommenes Medium vorgesehen, wobei die Betriebsparameter für die Vergasungseinrichtung und/oder die Luftzerlegungsanlage einerseits und für den Sättiger andererseits unabhängig voneinander einstellbar sind. Die zum Betrieb dieser Komponenten erforderli-chen Regelungseinrichtungen können somit auch vergleichsweise einfach aufgebaut sein.

In besonders vorteilhafter Weiterbildung ist der Vergasungseinrichtung Sauerstoff aus einer Luftzerlegungsanlage zuführbar, die ihrerseits eingangsseitig mit einem Teilstrom von in einem der Gasturbine zugeordneten Luftverdichter verdichteter Luft beaufschlagbar ist, wobei zur Kühlung des Teilstroms verdichteter Luft in eine den Luftverdichter mit der Luftzerlegungsanlage verbindende Entnahmeluftleitung primärseitig ein weiterer Wärmetauscher geschaltet ist, der sekundärseitig in eine den Sättigerwasser-Wärmetauscher ausgangsseitig mit einem dem Abhitzedampferzeuger zugeordneten Speisewasser verbindende Speisewasserleitung geschaltet ist. Durch eine derartige Anordnung ist ein besonders hoher Anlagenwirkungsgrad gewährleistet. Das dem Sättigerwasser-Wärmetauscher zuströmende Speisewasser kühlt sich bei der Wärmeeinkopplung in den im Sättigerkreislauf geführten Wasserstrom zunächst ab. Im dem Sättigerwasser-Wärmetauscher speisewasserseitig nachgeschalteten weiteren Wärmetauscher erfährt das abgekühlte Speisewasser sodann eine Wiederaufwärmung, wobei zugleich eine Kühlung des auch als Entnahmeluft bezeichneten, der Luftzerlegungsanlage zuströmenden Teilstroms verdichteter Luft erfolgt. Somit erfolgt für eine besonders hohe Wärmerückgewinnung eine Einkopplung von Wärme aus dem Entnahmeluftstrom in den Wasser-Dampf-Kreislauf der Dampfturbine.

Zur Kompensation von Verlusten im im Sättigerkreislauf geführten Wasserstrom, beispielsweise infolge der Beladung des vergasten Brennstoffs im Sättiger mit Wasserdampf, mündet in den Sättigerkreislauf zweckmäßigerweise eine Einspeiseleitung, wobei die Einmündungsstelle der Einspeiseleitung in den Sättigerkreislauf für einen besonders hohen Anlagenwirkungsgrad in besonders vorteilhafter Ausgestaltung in Strömungsrichtung des Wasserstroms gesehen vor dem Sättigerwasser-Wärmetauscher vorgesehen ist. Bei einer derartigen Anordnung ist ein besonders großer Wärmeübertrag vom Speisewasser auf den im Sättigerkreislauf geführten Wasserstrom gewährleistet. Das Speisewasser strömt somit mit besonders niedriger Temperatur vom Sättigerwasser-Wärmetauscher ab, so daß insbesondere bei Verwendung des abgekühlten Speisewassers zur Entnahmeluftkühlung auch eine besonders wirksame Entnahmeluftkühlung ermöglicht ist.

Die mit der Erfindung erzielten Vorteile bestehen insbesondere darin, daß durch die Wärmeeinkopplung in den Sättigerkreislauf über aus dem Wasser-Dampf-Kreislauf der Dampfturbine entnommenes Speisewasser ein zuverlässiger Betrieb des Sättigers unabhängig vom Betriebszustand der Vergasungseinrichtung ermöglicht ist. Somit kann insbesondere auch die Gasturbine innerhalb vorgegebener Parametergrenzen unabhängig vom Betriebszustand der Vergasungseinrichtung betrieben werden. Ein derartiges Konzept zur Wärmeeinkopplung ist somit besonders flexibel und insbesondere auch unabhängig vom Integrationskonzept, also unabhängig von der Art der Luftversorgung für die Luftzerlegungsanlage und den dabei eingesetzten Komponenten, einsetzbar. Durch die Verwendung des infolge des Wärmeübertrags auf den Wasserstrom abgekühlten Speisewassers zur Kühlung der Entnahmeluft für die Luftzerlegungsanlage ist zudem ein besonders hoher Anlagenwirkungsgrad gewährleistet.

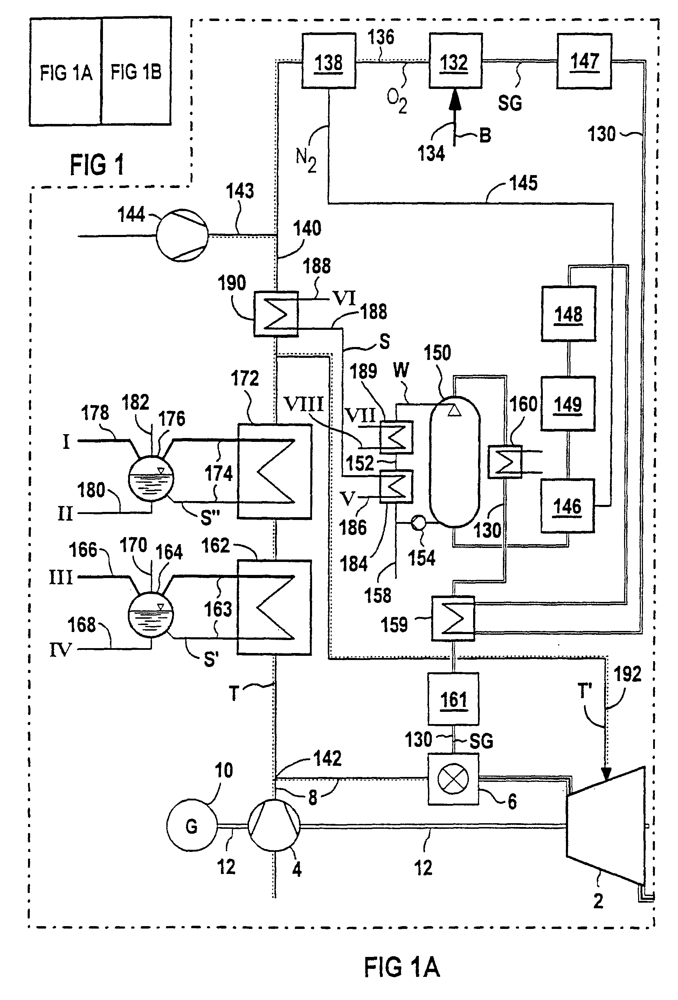

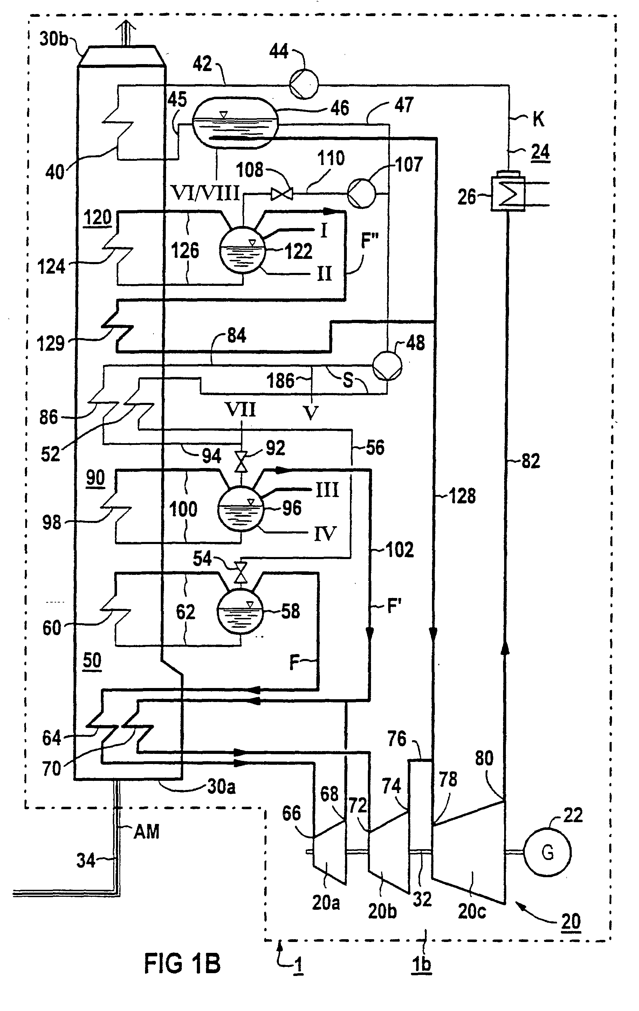

Ein Ausführungsbeispiel der Erfindung wird anhand einer Zeichnung näher erläutert. Darin zeigt die Figur schematisch eine Gas- und Dampfturbinenanlage.

Die Gas- und Dampfturbinenanlage 1 gemäß der Figur umfaßt eine Gasturbinenanlage 1a und eine Dampfturbinenanlage 1b. Die Gasturbinenanlage 1a umfaßt eine Gasturbine 2 mit angekoppeltem Luftverdichter 4 und eine der Gasturbine 2 vorgeschaltete Brennkammer 6, die an eine Druckluftleitung 8 des Verdichters 4 angeschlossen ist. Die Gasturbine 2 und der Luftverdichter 4 sowie ein Generator 10 sitzen auf einer gemeinsamen Welle 12.

Die Dampfturbinenanlage 1b umfaßt eine Dampfturbine 20 mit angekoppeltem Generator 22 und in einem Wasser-Dampf-Kreislauf 24 einen der Dampfturbine 20 nachgeschalteten Kondensator 26 sowie einen Abhitzedampferzeuger 30. Die Dampfturbine 20 besteht aus einer ersten Druckstufe oder einem Hochdruckteil 20a und einer zweiten Druckstufe oder einem Mitteldruckteil 20b sowie einer dritten Druckstufe oder einem Niederdruckteil 20c, die über eine gemeinsame Welle 32 den Generator 22 antreiben.

Zum Zuführen von in der Gasturbine 2 entspanntem Arbeitsmittel AM oder Rauchgas in den Abhitzedampferzeuger 30 ist eine Abgasleitung 34 an einen Eingang 30a des Abhitzedampferzeugers 30 angeschlossen. Das entspannte Arbeitsmittel AM aus der Gasturbine 2 verläßt den Abhitzedampferzeuger 30 über dessen Ausgang 30b in Richtung auf einen nicht näher dargestellten Kamin.

Der Abhitzedampferzeuger 30 umfaßt einen Kondensatvorwärmer 40, der eingangsseitig über eine Kondensatleitung 42, in die eine Kondensatpumpeneinheit 44 geschaltet ist, mit Kondensat K aus dem Kondensator 26 bespeisbar ist. Der Kondensatvorwärmer 40 ist ausgangsseitig über eine Leitung 45 an einen Speisewasserbehälter 46 angeschlossen. Zur bedarfsweisen Umführung des Kondensatvorwärmers 40 kannzudem die Kondensatleitung 42 über eine nicht dargestellte Umführungsleitung direkt mit dem Speisewasserbehälter 46 verbunden sein. Der Speisewasserbehälter 46 ist über eine Leitung 47 an eine Hochdruckspeisepumpe 48 mit Mitteldruckentnahme angeschlossen.

Die Hochdruckspeisepumpe 48 bringt das aus dem Speisewasserbehälter 46 abströmende Speisewasser S auf ein für eine dem Hochdruckteil der Dampfturbine 20 zugeordnete Hochdruckstufe 50 des Wasser-Dampf-Kreislaufs 24 geeignetes Druckniveau. Das unter hohem Druck stehende Speisewasser S ist der Hochdruckstufe 50 über einen Speisewasservorwärmer 52 zuführbar, der ausgangsseitig über eine mit einem Ventil 54 absperrbare Speisewasserleitung 56 an eine Hochdrucktrommel 58 angeschlossen ist. Die Hochdrucktrommel 58 ist mit einem im Abhitzedampferzeuger 30 angeordneten Hochdruckverdampfer 60 zur Bildung eines Wasser-Dampf-Umlaufs 62 verbunden. Zum Abführen von Frischdampf F ist die Hochdrucktrommel 58 an einen im Abhitzedampferzeuger 30 angeordneten Hochdrucküberhitzer 64 angeschlossen, der ausgangsseitig mit dem Dampfeinlaß 66 des Hochdruckteils 20a der Dampfturbine 20 verbunden ist.

Der Dampfauslaß 68 des Hochdruckteils 20a der Dampfturbine 20 ist über einen Zwischenüberhitzer 70 an den Dampfeinlaß 72 des Mitteldruckteils 20b der Dampfturbine 20 angeschlossen. Dessen Dampfauslaß 74 ist über eine Überströmleitung 76 mit dem Dampfeinlaß 78 des Niederdruckteils 20c der Dampfturbine 20 verbunden. Der Dampfauslaß 80 des Niederdruckteils 20c der Dampfturbine 20 ist über eine Dampfleitung 82 an den Kondensator 26 angeschlossen, so daß ein geschlossener Wasser-Dampf-Kreislauf 24 entsteht.

Von der Hochdruckspeisepumpe 48 zweigt zudem an einer Entnahmestelle, an der das Kondensat K einen mittleren Druck erreicht hat, eine Zweigleitung 84 ab. Diese ist über einen weiteren Speisewasservorwärmer 86 oder Mitteldruck-Economizer mit einer dem Mitteldruckteil 20b der Dampfturbine 20 zugeordneten Mitteldruckstufe 90 des Wasser-Dampf-Kreislaufs verbunden. Der zweite Speisewasservorwärmer 86 ist dazu ausgangsseitig über eine mit einem Ventil 92 absperrbare Speisewasserleitung 94 an eine Mitteldrucktrommel 96 der Mitteldruckstufe 90 angeschlossen. Die Mitteldrucktrommel 96 ist mit einer im Abhitzedampferzeuger 30 angeordneten, als Mitteldruckverdampfer ausgebildeten Heizfläche 98 zur Bildung eines Wasser-Dampf-Umlaufs 100 verbunden. Zum Abführen von Mitteldruck-Frischdampf F' ist die Mitteldrucktrommel 96 über eine Dampfleitung 102 an den Zwischenüberhitzer 70 und somit an den Dampfeinlaß 72 des Mitteldruckteils 20b der Dampfturbine 20 angeschlossen.

Von der Leitung 47 zweigt eine weitere, mit einer Niederdruckspeisepumpe 107 versehene und mit einem Ventil 108 absperrbare Leitung 110 ab, die an eine dem Niederdruckteil 20c der Dampfturbine 20 zugeordnete Niederdruckstufe 120 des Wasser-Dampf-Kreislaufs 24 angeschlossen ist. Die Niederdruckstufe 120 umfaßt eine Niederdrucktrommel 122, die mit einer im Abhitzedampferzeuger 30 angeordneten, als Niederdruckverdampfer ausgebildeten Heizfläche 124 zur Bildung eines Wasser-Dampf-Umlaufs 126 verbunden ist. Zum Abführen von Niederdruck-Frischdampf F'' ist die Niederdrucktrommel 122 über eine Dampfleitung 128, in die ein Niederdrucküberhitzer 129 geschaltet ist, an die Überströmleitung 76 angeschlossen. Der Wasser-Dampf-Kreislauf 24 der Gas- und Dampfturbinenanlage 1 umfaßt im Ausführungsbeispiel somit drei Druckstufen 50, 90, 120. Alternativ können aber auch weniger, insbesondere zwei, Druckstufen vorgesehen sein.

Die Gasturbinenanlage 1a ist für den Betrieb mit einem vergasten Synthesegas SG, das durch die Vergasung eines fossilen Brennstoffs B erzeugt wird, ausgelegt. Als Synthesegas kann beispielsweise vergaste Kohle oder vergastes Öl vorgesehen sein. Dazu ist die Brennkammer 6 der Gasturbine 2 eingangsseitig über eine Brennstoffleitung 130 an eine Vergasungseinrichtung 132 angeschlossen. Der Vergasungseinrichtung 132 ist über ein Eintragssystem 134 Kohle oder Öl als fossiler Brennstoff B zuführbar.

Zur Bereitstellung des für die Vergasung des fossilen Brennstoffs B benötigten Sauerstoffs O₂ ist der Vergasungseinrichtung 132 über eine Sauerstoffleitung 136 eine Luftzerlegungsanlage 138 vorgeschaltet. Die Luftzerlegungsanlage 138 ist eingangsseitig mit einem Teilstrom T der im Luftverdichter 4 verdichteten Luft beaufschlagbar. Dazu ist die Luftzerlegungsanlage 138 eingangsseitig an eine Entnahmeluftleitung 140 angeschlossen, die an einer Zweigstelle 142 von der Druckluftleitung 8 abzweigt. In die Entnahmeluftleitung 140 mündet zudem eine weitere Luftleitung 143, in die ein zusätzlicher Luftverdichter 144 geschaltet ist. Im Ausführungsbeispiel setzt sich somit der der Luftzerlegungsanlage 138 zuströmende gesamte Luftstrom L zusammen aus dem von der Druckluftleitung 8 abgezweigten Teilstrom T und aus dem vom zusätzlichen Luftverdichter 144 geförderten Luftstrom. Ein derartiges Schaltungskonzept wird auch als teilintegriertes Anlagenkonzept bezeichnet. In einer alternativen Ausgestaltung, dem sogenannten vollintegrierten Anlagenkonzept, kann die weitere Luftleitung 143 mitsamt dem zusätzlichen Luftverdichter 144 auch entfallen, so daß die Bespeisung der Luftzerlegungsanlage 138 mit Luft vollständig über den der Druckluftleitung 8 entnommenen Teilstrom T erfolgt.

Der in der Luftzerlegungsanlage 138 bei der Zerlegung des - Luftstroms L zusätzlich zum Sauerstoff O₂ gewonnene Stickstoff N₂ wird über eine an die Luftzerlegungsanlage 138 angeschlossene Stickstoffleitung 145 einer Mischvorrichtung 146 zugeführt und dort dem Synthesegas SG zugemischt. Die Mischvorrichtung 146 ist dabei für eine besonders gleichförmige und strähnenfreie Vermischung des Stickstoffs N₂ mit dem Synthesegas SG ausgebildet.

Das von der Vergasungseinrichtung 132 abströmende Synthesegas SG gelangt über die Brennstoffleitung 130 zunächst in einen Rohgas-Abhitzedampferzeuger 147, in dem durch Wärmetausch mit einem Strömungsmedium eine Abkühlung des Synthesegases SG erfolgt. Bei diesem Wärmetausch erzeugter Hochdruckdampf wird in nicht näher dargestellter Weise der Hochdruckstufe 50 des Wasser-Dampf-Kreislaufs 24 zugeführt.

In Strömungsrichtung des Synthesegases SG gesehen hinter dem Rohgas-Abhitzedampferzeuger 147 und vor der Mischvorrichtung 146 sind in die Brennstoffleitung 130 eine Entstaubungseinrichtung 148 für das Synthesegas SG sowie eine Entschwefelungsanlage 149 geschaltet. In alternativer Ausgestaltung kann anstelle der Enstaubungseinrichtung 148, insbesondere bei Vergasung von Öl als Brennstoff, auch eine Rußwäschevorrichtung vorgesehen sein.

Für einen besonders geringen Schadstoffausstoß bei der Verbrennung des vergasten Brennstoffs in der Brennkammer 6 ist eine Beladung des vergasten Brennstoffs mit Wasserdampf vor Eintritt in die Brennkammer 6 vorgesehen. Diese kann in wärmetechnisch besonders vorteilhafter Weise in einem Sättigersystem erfolgen. Dazu ist in die Brennstoffleitung 130 ein Sättiger 150 geschaltet, in dem der vergaste Brennstoff im Gegenstrom zu einem auch als Sättigerwasser bezeichneten, aufgeheizten Wasserstrom W geführt ist. Das Sättigerwasser oder der Wasserstrom W zirkuliert dabei in einem an den Sättiger 150 angeschlossenen Sättigerkreislauf 152, in den eine Umwälzpumpe 154 geschaltet ist. Zum Ausgleich der bei der Sättigung des vergasten Brennstoffs auftretenden Verluste an Sättigerwasser ist an den Sättigerkreislauf 152 eine Einspeiseleitung 158 angeschlossen.

In Strömungsrichtung des Synthesegases SG gesehen hinter dem Sättiger 150 ist in die Brennstoffleitung 130 sekundärseitig ein als Rohgas-Mischgas-Wärmetauscher wirkender Wärmetauscher 159 geschaltet. Der Wärmetauscher 159 ist dabei primärseitig an einer Stelle vor der Entstaubungsanlage 148 ebenfalls in die Brennstoffleitung 130 geschaltet, so daß das der Entstaubungsanlage 148 zuströmende Synthesegas SG einen Teil seiner Wärme auf das aus dem Sättiger 150 abströmende Synthesegas SG überträgt. Die Führung des Synthesegases SG über den Wärmetauscher 159 vor Eintritt in die Entschwefelungsanlage 149 kann dabei auch bei einem hinsichtlich der anderen Komponenten abgeänderten Schaltungskonzept vorgesehen sein. Insbesondere bei Einschaltung einer Rußwäscheeinrichtung kann der Wärmetauscher bevorzugt rohgasseitig stromab der Rußwäscheeinrichtung angeordnet sein.

Zwischen den Sättiger 150 und den Wärmetauscher 159 ist in die Brennstoffleitung 130 sekundärseitig ein weiterer Wärmetauscher 160 geschaltet, der primärseitig speisewasserbeheizt oder auch dampfbeheizt sein kann. Durch den als Rohgas-Reingas-Wärmetauscher ausgebildeten Wärmetauscher 159 und den Wärmetauscher 160 ist dabei eine besonders zuverlässige Vorwärmung des der Brennkammer 6 der Gasturbine 2 zuströmenden Synthesegases SG auch bei verschiedenen Betriebszuständen der Gas- und Dampturbinenanlage 1 gewährleistet.

Zur bedarfsweisen Beaufschlagung des der Brennkammer 6 zuströmenden Synthesegases SG mit Dampf ist in die Brennstoffleitung 130 zudem eine weitere Mischvorrichtung 161 geschaltet, der Mitteldruck-Dampf über eine nicht näher dargestellte Dampfleitung zuführbar ist, insbesondere zur Sicherung eines zuverlässigen Gasturbinenbetriebs bei betrieblichen Störfällen.

Zur Kühlung des der Luftzerlegungsanlage 138 zuzuführenden, auch als Entnahmeluft bezeichneten Teilstroms T verdichteter Luft ist in die Entnahmeluftleitung 140 primärseitig ein Wärmetauscher 162 geschaltet, der sekundärseitig als Mitteldruckverdampfer für ein Strömungsmedium S' ausgebildet ist. Der Wärmetauscher 162 ist zur Bildung eines Verdampferumlaufs 163 mit einer als Mitteldrucktrommel ausgebildeten Wasser-Dampf-Trommel 164 verbunden. Die Wasser-Dampf-Trommel 164 ist über Leitungen 166, 168 mit der dem Wasser-Dampf-Umlauf 100 zugeordneten Mitteldrucktrommel 96 verbunden. Alternativ kann der Wärmetauscher 162 sekundärseitig aber auch direkt an die Mitteldrucktrommel 96 angeschlossen sein. Im Ausführungsbeispiel ist die Wasser-Dampf-Trommel 164 also mittelbar an die als Mitteldruckverdampfer ausgebildete Heizfläche 98 angeschlossen. Zur Nachspeisung von verdampftem Strömungsmedium S' ist an die Wasser-Dampf-Trommel 164 zudem eine Speisewasserleitung 170 angeschlossen.

In Strömungsrichtung des Teilstroms T verdichteter Luft gesehen nach dem Wärmetauscher 162 ist in die Entnahmeluftleitung 140 ein weiterer Wärmetauscher 172 geschaltet, der sekundärseitig als Niederdruckverdampfer für ein Strömungsmedium S'' ausgebildet ist. Der Wärmetauscher 172 ist dabei zur Bildung eines Verdampferumlaufs 174 an eine als Niederdrucktrommel ausgebildete Wasser-Dampf-Trommel 176 angeschlossen. Im Ausführungsbeispiel ist die Wasser-Dampf-Trommel 176 über Leitungen 178, 180 an die dem Wasser-Dampf-Umlauf 126 zugeordnete Niederdrucktrommel 122 angeschlossen und somit mittelbar mit der als Niederdruckverdampfer ausgebildeten Heizfläche 124 verbunden. Alternativ kann die Wasser-Dampf-Trommel 176 aber auch in anderer geeigneter Weise geschaltet sein, wobei der Wasser-Dampf-Trommel 176 entnommener Dampf einem Nebenverbraucher als Prozeßdampf und/oder als Heizdampf zuführbar ist. In weiterer alternativer Ausgestaltung kann der Wärmetauscher 172 sekundärseitig auch direkt an die Niederdrucktrommel 122 angeschlossen sein. Die Wasser-Dampf-Trommel 176 ist zudem an eine Speisewasserleitung 182 angeschlossen.

Die Verdampferumläufe 163, 174 können jeweils als Zwangumlauf ausgebildet sein, wobei der Umlauf des Strömungsmedium S' bzw. S'' durch eine Umwälzpumpe gewährleistet ist, und wobei das Strömungsmedium S', S'' im als Verdampfer ausgebildeten Wärmetauscher 162 bzw. 172 mindestens teilweise verdampft. Im Ausführungsbeispiel sind jedoch sowohl der Verdampferumlauf 163 als auch der Verdampferumlauf 174 jeweils als Naturumlauf ausgebildet, wobei der Umlauf des Strömungsmediums S' bzw.

S'' durch die sich beim Verdampfungsprozeß einstellenden Druckdifferenzen und/oder durch die geodätische Anordnung des jeweiligen Wärmetauschers 162 bzw. 172 und der jeweiligen Wasser-Dampf-Trommel 164 bzw. 176 gewährleistet ist. Bei dieser Ausgestaltung ist in den Verdampferumlauf 163 bzw. in den Verdampferumlauf 174 jeweils lediglich eine (nicht dargestellte) vergleichsweise gering dimensionierte Umwälzpumpe zum Anfahren des Systems geschaltet.

Zur Wärmeeinkopplung in den Sättigerkreislauf 152 und somit zur Einstellung eines für die Beladung des Synthesegases SG mit Wasserdampf ausreichenden Temperaturniveaus im Wasserstrom W ist ein Sättigerwasser-Wärmetauscher 184 vorgesehen, der primärseitig mit Speisewasser S aus dem Speisewasserbehälter 46 beaufschlagbar ist. Dazu ist der Sättigerwasser-Wärmetauscher 184 primärseitig eingangsseitig über eine Leitung 186 an die Zweigleitung 84 und ausgangsseitig über eine Leitung 188 an den Speisewasserbehälter 46 angeschlossen. Der Sättigerwasser-Wärmetauscher 184 ist dabei sekundärseitig in Strömungsrichtung des Wasserstroms W gesehen nach der Einmündung der Einspeiseleitung 158 in den Sättigerkreislauf 152 geschaltet.

Zur bedarfsweisen Zusatzbeheizung des Wasserstroms W ist im Ausführungsbeispiel in den Sättigerkreislauf 152 ein Zusatzwärmetauscher 189 geschaltet. Der Zusatzwärmetauscher 189 ist dabei primärseitig mit vorgewärmtem Speisewasser aus der Mitteldruckstufe 90 des Wasser-Dampf-Kreislaufs 24 beaufschlagt. Der Zusatzwärmetauscher 189 kann jedoch auch - je nach vorgegebenen Emissionswerten und / oder Brenngastemperaturen - entfallen.

Zur Wiederaufheizung des aus dem Sättigerwasser-Wärmetauscher 184 abströmenden gekühlten Speisewassers S ist in die Leitung 188 ein weiterer Wärmetauscher 190 geschaltet, der primärseitig dem Wärmetauscher 172 in der Entnahmeluftleitung 140 nachgeschaltet ist. Durch eine derartige Anordnung ist eine besonders hohe Wärmerückgewinnung aus der Entnahmeluft und somit ein besonders hoher Wirkungsgrad der Gas- und Dampfturbinenanlage 1 erreichbar.

In Strömungsrichtung des Teilstroms T gesehen zwischen dem Wärmetauscher 172 und dem Wärmetauscher 190 zweigt von der Entnahmeluftleitung 140 eine Kühlluftleitung 192 ab, über die der Gasturbine 2 eine Teilmenge T' des gekühlten Teilstroms T als Kühlluft zur Schaufelkühlung zuführbar ist.

Durch die Beaufschlagung des Sättigerwasser-Wärmetauschers 184 mit Speisewasser S aus dem Wasser-Dampf-Kreislauf 24 der Dampfturbine 20 ist ein zuverlässiger Betrieb des Sättigers 150 unabhängig vom Betriebszustand der Luftzerlegungsanlage 138 möglich. Der Gesamtwirkungsgrad der Gas- und Dampfturbinenanlage 1 ist dabei insbesondere dadurch begünstigt, daß eine Wiederaufheizung des im Sättigerwasser-Wärmetauscher 184 abgekühlten Speisewassers S im zusätzlichen Wärmetauscher 190 erfolgt. Dabei ist eine zuverlässige Einstellung der Endtemperatur des als Entnahmeluft der Luftzerlegungsanlage 138 zuströmenden Teilstroms T bei gleichzeitiger Rückgewinnung der in diesem geführten Wärme für den Energieerzeugungsprozeß der Gas- und Dampfturbinenanlage 1 gewährleistet.

## Patentansprüche

1. Gas- und Dampfturbinenanlage (1) mit einem einer Gasturbine (2) rauchgasseitig nachgeschalteten Abhitzedampferzeuger (30), dessen Heizflächen in den Wasser-Dampf-Kreislauf (24) einer Dampfturbine (20) geschaltet sind, und mit einer der Brennkammer (6) der Gasturbine (2) über eine Brennstoffleitung (130) vorgeschalteten Vergasungseinrichtung (132) für Brennstoff (B), wobei in die Brennstoffleitung (130) ein Sättiger (150) geschaltet ist, in dem der vergaste Brennstoff (SG) im Gegenstrom zu einem in einem Sättigerkreislauf (152) geführten Wasserstrom (W) geführt ist, und wobei ein zur Erwärmung des Wasserstroms (W) sekundärseitig in den Sättigerkreislauf (152) geschalteter Sättigerwasser-Wärmetauscher (184) primärseitig mit aus dem Wasser-Dampf-Kreislauf (24) der Dampfturbine (20) entnommenem Speisewasser (S) beaufschlagbar ist, wobei das im Sättigerwasser-Wärmetauscher (184) abgekühlte Speisewasser (S) mittels eines Teilstroms (T) verdichteter Luft aufwärmbar ist, wobei der Teilstrom (T) verdichteter Luft einer der Vergasungseinrichtung (132) vorgeschalteten Luftzerlegungsanlage (138) zuführbar ist,
**dadurch gekennzeichnet, daß** zur Kühlung des Teilstroms (T) verdichteter Luft in eine den Luftverdichter (4) mit der Luftzerlegungsanlage (138) verbindende Entnahmeluftleitung (140) primärseitig ein weiterer Wärmetauscher (190) geschaltet ist, der sekundärseitig in eine den Sättigerwasser-Wärmetauscher (184) ausgangsseitig mit einem dem Abhitzedampferzeuger (30) zugeordneten Speisewasserbehälter (46) verbindende Speisewasserleitung (188) geschaltet ist.

2. Gas- und Dampfturbinenanlage (1) nach Anspruch 1,
**dadurch gekennzeichnet, daß** bei der der Vergasungseinrichtung (132) Sauerstoff (O₂) aus der Luftzerlegungsanlage (138) zuführbar ist, die ihrerseits eingangsseitig mit dem Teilstrom (T) von in einem der Gasturbine (2) zugeordneten Luftverdichter (4) verdichteter Luft beaufschlagbar ist.

3. Gas- und Dampfturbinenanlage (1) nach Anspruch 1 oder 2, bei der eine Einspeiseleitung (158) in Strömungsrichtung des Wasserstroms (W) gesehen vor dem Sättigerwasser-Wärmetauscher (184) in den Sättigerkreislauf (152) mündet.

## Claims

1. Gas turbine and steam turbine installation (1) with a waste-heat steam generator (30) whose flue gas side is connected downstream of a gas turbine (2), the heating surfaces of which waste-heat steam generator (30) being connected into the water/steam cycle (24) of a steam turbine (20), and having a gasification device (132), for fuel (B), connected upstream of the combustion chamber (6) of the gas turbine (2) by means of a fuel line (130), a saturator (150), in which the gasified fuel (SG) is guided in counterflow to a water flow (W) guided in a saturator cycle (152), being connected into the fuel line (130) and a saturator-water heat exchanger (184) connected on the secondary side into the saturator cycle (152) to heat the water flow (W) is capable of being subjected, on the primary side, to feed water (S) extracted from the water/steam cycle (24) of the steam turbine (20), it being possible to heat the feed water (S) cooled in the saturator-water heat exchanger (184) by means of a partial flow (T) of compressed air, it being possible to supply the partial flow (T) of compressed air to an air separation installation (138) connected upstream of the gasification device (132).

2. Gas turbine and steam turbine installation (1) according to Claim 1, in which oxygen (O₂) from the air separation installation (138) can be supplied to the gasification device (132), which air separation installation (138) can, for its part, be subjected at the inlet end to the partial flow (T) of air compressed in an air compressor (4) associated with the gas turbine (2), a further heat exchanger (190) being connected on the primary side in a tapped air line (140) connecting the air compressor (4) to the air separation installation (138) in order to cool the partial flow (T) of compressed air, the secondary side of which further heat exchanger (190) is connected into a feed water line (188) connecting the saturator-water heat exchanger (184) at the outlet end to a feed water tank (46) associated with the waste-heat steam generator (30).

3. Gas turbine and steam turbine installation (1) according to Claim 1 or 2, in which a feed line (158) opens into the saturator cycle (152) before the saturator-water heat exchanger (184), viewed in the flow direction of the water flow (W).

## Revendications

1. Installation (1) de turbine à gaz et de turbine à vapeur comprenant un générateur (30) de vapeur à récupération de la chaleur perdue, qui est monté en aval du côté des gaz de fumée d'une turbine (2) à gaz et dont les surfaces de chauffe sont montées dans le circuit (24) eau-vapeur d'une turbine (20) à vapeur, et un dispositif (132) de gazéification de combustible (B) monté par l'intermédiaire d'un conduit (130) pour du combustible en amont de la chambre (6) de combustion de la turbine (2) à gaz, un saturateur (150) étant monté dans le conduit (130) pour du combustible, saturateur dans lequel le combustible (SG) gazéifié passe à contre-courant d'un courant (W) d'eau passant dans un circuit (152) de saturateur et un échangeur de chaleur d'eau de saturateur monté pour le réchauffement du courant (W) d'eau du côté secondaire dans le circuit (152) de saturateur pouvant être alimenté du côté primaire par de l'eau (S) d'alimentation prélevée du circuit (24) eau-vapeur de la turbine (20) à vapeur, l'eau (S) d'alimentation refroidie dans l'échangeur de chaleur (184) d'eau de saturateur pouvant être réchauffée au moyen d'un courant (T) partiel d'air comprimé, le courant (T) partiel d'air comprimé pouvant être envoyé à une installation (138) de fractionnement de l'air montée en amont du dispositif (132) de gazéification,
**caractérisée en ce que** pour refroidir le courant (T) partiel d'air comprimé il est monté, dans un conduit (140) d'air de prélèvement mettant le compresseur (4) d'air en communication avec l'installation (138) de fractionnement de l'air du côté primaire, un échangeur de chaleur (190) supplémentaire qui est monté du côté secondaire dans un conduit (188) d'eau d'alimentation mettant en communication l'échangeur de chaleur (184) d'eau de saturateur du côté de la sortie avec une cuve (46) d'eau d'alimentation associée au générateur (30) de vapeur à récupération de chaleur perdue.

2. Installation (1) de turbine à gaz et de turbine à vapeur suivant la revendication 1,
**caractérisée en ce qu'**il peut être apporté au dispositif (132) de gazéification de l'oxygène (O₂) provenant de l'installation (138) de fractionnement de l'air qui, pour sa part, peut être alimentée du côté d'entrée par le courant (T) partiel d'air comprimé dans un compresseur (4) d'air associé à la turbine (2) à gaz.

3. Installation (1) de turbine à gaz et de turbine à vapeur suivant la revendication 1 ou 2,
dans laquelle un conduit (158) d'alimentation débouche, considéré dans le sens d'écoulement du courant (W) d'eau, dans le circuit (152) de saturateur en amont de l'échangeur de chaleur (184) d'eau de saturateur.
